# EUROPÄISCHE PATENTSCHRIFT

(11) **EP 1 359 250 B1**
(45) Veröffentlichungstag und Bekanntmachung des Hinweises auf die Patenterteilung: **13.12.2006**
(21) Anmeldenummer: 03004767.4
(22) Anmeldetag: 05.03.2003
(51) Int. Cl.: D21B 1/32, D21D 1/20, D21D 1/30

(54) **Verfahren zur Dispergierung eines Papierfaserstoffes**
Process for dispersing pulp
Procédé pour disperser une pulpe de fibres de papier

(30) Priorität: 03.05.2002 DE 10219843
(43) Veröffentlichungstag der Anmeldung: 05.11.2003
(73) Patentinhaber: Voith Patent GmbH, 89522 Heidenheim (DE)
(72) Erfinder: Bendiksen, Pal. B., 3048 Tranby (NO); Gommel, Axel, 88214 Ravensburg (DE); Niggl, Volker, 88250 Weingarten (DE)

(56) Entgegenhaltungen:
- DE-A- 2 943 904
- DE-C- 3 728 890
- US-A- 3 682 444

## Beschreibung

Die Erfindung betrifft ein Verfahren zur Dispergierung von Papierfaserstoff gemäß dem Oberbegriff des Anspruchs 1.

Verfahren der o.g. Art werden z.B. zur Qualitätsverbesserung von Faserstoff eingesetzt, der aus Altpapier gewonnen wurde. Es ist bekannt, dass Papierfaserstoff durch Dispergieren homogenisiert und dadurch wesentlich verbessert werden kann. Dazu wird ein hochkonsistenter Papierfaserstoff hergestellt, der einen Trockengehalt zwischen 15 und 35 % aufweist. In vielen Fällen wird bei einer Temperatur dispergiert, die weit über der Umgebungstemperatur liegt. Disperger, die für solche Verfahren eingesetzt werden, sind meist sehr kompakt und haben bei hoher Energiedichte eine ausgezeichnete Dispergierwirkung. Sie setzen allerdings einen gleichmäßigen Stoffstrom voraus.

Durch das Eindicken auf 15 bis 35 % wird ein beträchtlicher Teil des vorher noch im Faserstoff vorhandenen Wassers ausgepresst, wodurch erstens seine Viskosität bei der Dispergierung wesentlich ansteigt und zweitens gegebenenfalls weniger Wasser mit erwärmt werden muss. Eine besonders wirtschaftliche Maschine für die Eindickung ist die Schneckenpresse. Bei einer Schneckenpresse wird die Faserstoffsuspension zwischen einer Förderschnecke und einem diese umgebenden gelochten Mantel ausgepresst, wobei das Wasser durch die Löcher des Mantels austritt. Der dabei entstehende hochkonsistente Papierfaserstoff wird aus der Schnecke ausgedrückt.

Moderne Anlagen zur Durchführung eines solchen Verfahrens sollen automatisch arbeiten. Sie weisen daher einen oder mehrere Regelkreise auf, um ohne ständiges menschliches Eingreifen einen ausreichend konstanten Betrieb zu ermöglichen. Besonders wenn als Rohstoff für die Papierfaserstofferzeugung Altpapier verwendet wird, ist es unvermeidbar, dass sich die Rohstoff-Eigenschaften, insbesondere die Zusammensetzung der im Papierfaserstoff enthaltenen Fasern sowie die Menge der Nicht-Faserbestandteile ändern. Es ist daher anzustreben, die Regelung einer zur Dispergierung dienenden Anlage so zu gestalten, dass trotz der erwähnten Schwankungen ein möglichst gleichmäßig bearbeiteter Papierfaserstoff der weiteren Verwendung zugeführt werden kann.

Aus der DE 37 28 890 ist ein Dispergierverfahren bekannt, bei dem die spezifische Arbeit des Dispergers dadurch geregelt wird, dass je nach Bedarf mehr oder weniger Verdünnungswasser vor der Dispergierung zugegeben wird. Das Verfahren ist wirksam, aber nicht immer ausreichend und erfordert einen erhöhten Eindickungsaufwand.

Es ist Aufgabe der Erfindung, ein Verfahren zu schaffen, bei dem die Dispergieranlage mit einfachen, zuverlässigen Mitteln geregelt werden kann.

Diese Aufgabe wird durch die im Kennzeichen des Anspruchs 1 genannten Merkmale vollständig gelöst.

Mit Hilfe des neuen Verfahrens ist es möglich, für eine Dispergieranlage, die zur Dispergierung von Papierfaserstoffen dient, eine einfache und wirksame Regelstrategie zu entwerfen. Dabei wird die Tatsache genutzt, dass sich aus der Leistungsaufnahme des Dispergerantriebes Rückschlüsse auf die Zusammensetzung des hochkonsistenten Faserstoffes, insbesondere auf seine Konsistenz, ziehen lassen. Es ist nämlich oft nicht möglich, auch bei mit konstanter Zulaufmenge betriebenen Eindickvorrichtungen und ansonsten konstant gehaltenen Betriebsparametern eine konstante Ausgangsstoffdichte zu erzielen. Vielmehr besteht immer die Gefahr, dass der hochkonsistente Papierfaserstoff, der die Eindickvorrichtung verlässt, in seiner Konsistenz solche Schwankungen aufweist , dass erstens die nachfolgende Dispergierung ungleichmäßig wird und zweitens auch weitere Prozessschritte wegen eben dieser ungleichmäßigen Konsistenz beeinträchtigt werden. Zum Beispiel wird in vielen Fällen eine Aufheizung des eingedickten Stoffes vorgenommen, dessen Dampfbedarf selbstverständlich auch von dessen Konsistenz abhängt. Diese Probleme lassen sich durch das erfindungsgemäße Verfahren beseitigen, welches mit einfachen Mitteln für eine konstante Konsistenz des zu dispergierenden Faserstoffes sorgt. Dabei wird also der mechanische Widerstand des Stoffes im Disperger als Indiz für dessen Zusammensetzung herangezogen.

Die Erfindung und ihre Vorteile werden erläutert an Hand von Zeichnungen. Dabei zeigen:
- Fig. 1: schematisch: Anlage zur Durchführung des erfindungsgemäßen Verfahrens;
- Fig. 2: eine Variante bei der Stofferwärmung;
- Fig. 3: eine Variante bei der Eindickvorrichtung;
- Fig. 4: Teilansicht von für das Verfahren besonders geeigneten Vorrichtungen.

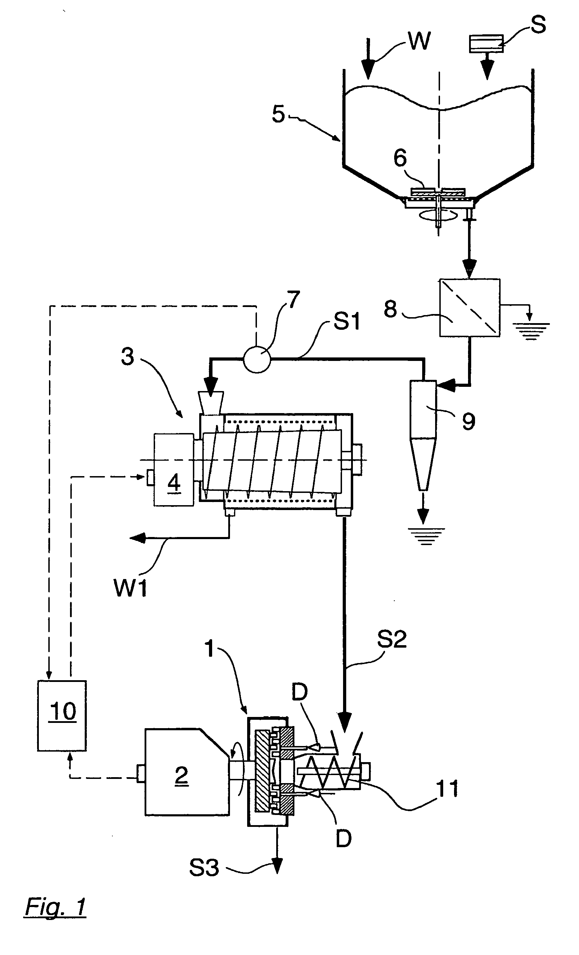

In einer vereinfachten Darstellung zeigt die Fig. 1 ein Ausführungsbeispiel mit den wichtigsten Apparaturen, die man bei Durchführung des erfindungsgemäßen Verfahrens verwenden kann. Das Verfahren geht aus von einem Rohstoff S, der z.B. aus Altpapier besteht und zusammen mit Wasser W in einem Stofflöser 5 mit Hilfe eines angetriebenen Rotors 6 aufgelöst wird. Die so erzeugte Papierfaserstoffsuspension S1 gelangt durch ein Sieb im Boden des Stofflösers 5 sowie durch einen Drucksortierer 8 und Dickstoffreiniger 9, wodurch die groben Störstoffe des Altpapiers entfernt werden. Bei Stofflösern der hier angedeuteten Art hat die Suspension eine Konsistenz, also einen Feststoffgehalt zwischen 3 und 6 %. Es sind aber auch Auflöseverfahren denkbar, bei denen ein Feststoffgehalt von über 12 % eingestellt wird. Durch die sich nun anschließende Eindickvorrichtung 3 - hier eine Schneckenpresse - wird aus der Suspension S1 ein hochkonsistenter Papierfaserstoff S2 gebildet. Das abgepresste Wasser W1 kann mit Vorteil wieder zum Auflösen im Stofflöser 5 verwendet werden.
Der Papierfaserstoff S2 gelangt als nächstes in einen Disperger 1. Dabei wird er über eine Zuführschnecke 11 zentral zwischen zwei relativ zueinander bewegte Dispergergarnituren geführt, zwischen denen er dispergiert wird und danach als homogener Faserstoff S3 aus dem Gehäuse des Dispergers herausfällt. Der Rotor dieses Dispergers 1 wird durch den Dispergerantrieb 2 angetrieben. Die am Dispergerantrieb 2 ermittelte Leistungsaufnahme oder der Wert des dort gemessenen Antriebsmoments wird an einen Regler 10 weitergemeldet. Dieser kann dann erfindungsgemäß bei Abweichung von den vorgegebenen Sollwerten Einfluss nehmen auf die Eindickvorrichtung 3. Wenn dafür eine Schneckenpresse, wie hier dargestellt, verwendet wird, gibt es die Möglichkeit, das Antriebsmoment ihres Antriebs 4 zur Einstellung der Konsistenz des hochkonsistenten Papierfaserstoffes S2 zu verändern z.B. durch Variation der Schnecken-Drehzahl. Es ist von Vorteil, wenn der Regler 10 auch einen Messwert für die z.B. in die Eindickvorrichtung 3 zugegebene Stoffmenge erhält, wozu hier ein Messwertgeber 7 vorgesehen ist. Üblicherweise wird der durch diesen Teil der Anlage geführte Stoffstrom konstant eingestellt. Durch Messung des Volumenstroms und der Konsistenz kann die im Disperger 1 verarbeitete Feststoffmenge ermittelt werden. Daraus wiederum ergibt sich die Möglichkeit, die spezifische Arbeit im Disperger einzustellen.

Die spezifische Arbeit, üblicherweise angegeben in kWh/t, ist ein zentrales Kriterium für den Dispergiereffekt. Dispergierung soll den Faserstoff vergleichmäßigen, hat aber auch eine fasertechnologische Wirkung. Damit sind Änderungen der Papierfasern selbst gemeint; Änderungen, die oft unerwünscht sind, die zumindest ein bestimmtes Maß nicht übersteigen sollten. Sie werden wesentlich von den Abständen beeinflusst, in denen sich die Disperger-Arbeitselemente, z.B. die Zähne der Dispergergarnituren aneinander vorbei bewegen. Eine Änderung dieser Abstände hat also Auswirkungen sowohl auf die spezifische Arbeit, als auch auf die Fasertechnologie.

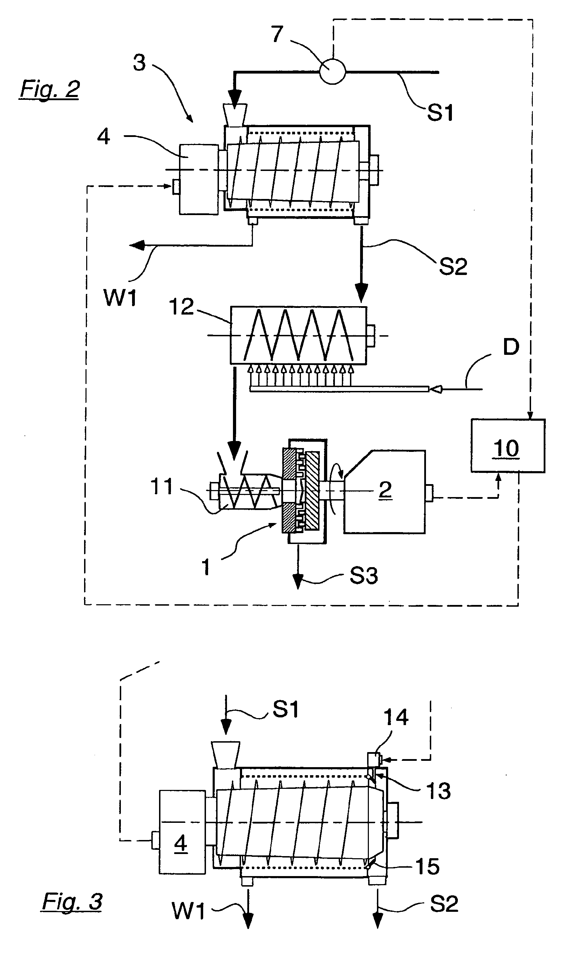

Wie bereits erwähnt, findet eine gute Dispergierung zumeist bei erhöhten Temperaturen statt. Bei dem in Fig. 1 gezeigten Beispiel ist die hohe Stofftemperatur dadurch gewährleistet, dass unmittelbar in den Disperger 1 Dampf D durch eine Anzahl von Dampfleitungen, die hier nur angedeutet sind, eingespeist wird. Diese moderne Form der Stofferwärmung ist z.B. in der DE 197 12 653 A1 beschrieben. Sie hat neben dem drastisch reduzierten apparativen Aufwand den Vorteil von kurzen Verweilzeiten, was wiederum die Regelung der ganzen Anlage verbessert. Eine andere Möglichkeit, den Stoff zu erwärmen, zeigt die Variante in Fig. 2. Dabei handelt es sich mehr um die klassische Ausführungsform des Verfahrens, bei der der hochkonsistente Papierfaserstoff S2 in eine Heizschnecke 12 eingeführt wird. Der erforderliche Dampf D wird durch eine Anzahl von Öffnungen in das Innere dieser Heizschnecke 12 eingeblasen. Auf Grund der technisch-physikalischen Verhältnisse muss in der Regel eine Verweilzeit von mehreren Minuten vorgesehen werden, bis der Stoff die erforderliche Temperatur hat. Abgesehen von der dadurch erhöhten Regeltotzeit hat diese Verfahrensvariante aber durchaus auch ihre Vorteile.

Die bereits beschriebene Regelung der als Eindickvorrichtung 3 benutzten Schneckenpresse durch Veränderung der Schnecken-Drehzahl ist bekanntlich nicht die einzige Möglichkeit. Zusätzlich oder alternativ kann am Ausgang der Schneckenpresse, also dort, wo der hochkonsistente Stoff den Bereich der Schnecke verlässt, ein Gegendruck aufgebaut werden. Diese Maßnahme kann die Entwässerungsleistung der Schnecke im großen Bereich steuern. In Fig. 3 ist eine so verwendbare Schneckenpresse schematisch dargestellt. Die Gegendruckvorrichtung 13 ist dabei nur angedeutet. Sie kann z.B. aus einer Anzahl von Schwenkklappen 15 bestehen. Sie enthält eine Steuereinheit 14, mit deren Hilfe während des Betriebes eine Verstellung der Gegendruckeinrichtung vorgenommen werden kann. Selbstverständlich ist auch denkbar, dass beide Einflussnahme-Möglichkeiten auf den Betrieb einer solchen Schneckenpresse sinnvoll kombiniert und in das Regelkonzept eingebunden werden.

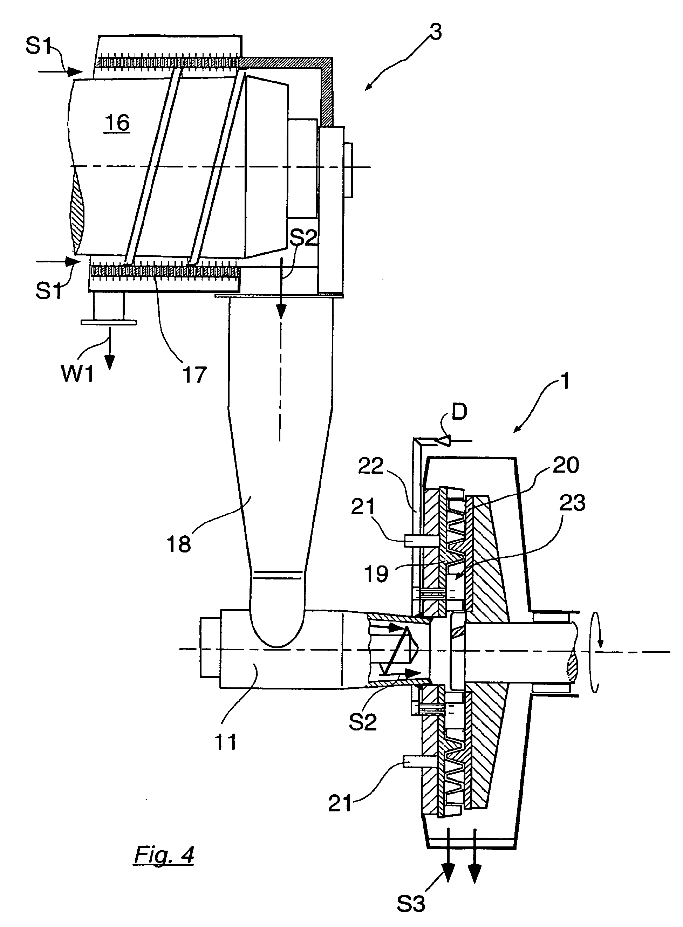

Besonders gut für das Verfahren geeignete Vorrichtungen sind in Fig. 4 etwas detaillierter dargestellt, ohne dass alle konstruktiven Details sichtbar sind. Man erkennt zunächst oben den stromabwärtigen Teil einer als Eindickvorrichtung 3 dienenden Schneckenpresse. Die einzudickende Suspension S1 wird darin zwischen einer mit konischem Kern versehenen Pressschnecke 16 und einem zylindrischen Siebmantel 17 axial gefördert und gepresst, so dass das Wasser W1 durch den Siebmantel 17 austreten kann. Der hochkonsistente Papierfaserstoff S2 gelangt durch einen Fallschacht 18 in die Zuführschnecke 11. Man erkennt hier etwas genauer, dass der Disperger 1 zwei Dispergergarnituren 19 und 20 aufweist, die jeweils mehrere berührungslos ineinandergreifende ringförmige konzentrische Zahnreihen enthalten. Da die Dispergergarnitur 20 zu einem angetriebenen Rotor gehört, können ihre Zähne in Umfangsrichtung relativ zur Statorgarnitur bewegt werden, wodurch der hochkonsistente Papierfaserstoff dispergiert wird.

Der hier dargestellte Disperger enthält eine Verstellvorrichtung 21, mit der der axiale Abstand der Dispergergarnituren voneinander veränderbar ist. Diese ist allerdings nur angedeutet. Da die Zähne der Dispergergarnituren eine konische Form haben, führt die Axialverschiebung dazu, dass sich die Abstände ihrer Flanken zu denen der jeweiligen Gegengarnitur verändern mit den schon genannten energetischen und technologischen Auswirkungen. Das neue Verfahren kann diese Verstellmöglichkeit überflüssig machen, was zu Einsparungen führt. Es ist aber auch denkbar, beide Einflussmöglichkeiten zu kombinieren, um durch die Axialverstellung eine totzeitfreie Regelung für Kurzzeitschwankungen am Disperger selbst zu haben und außerdem ein größeres Regelpotenzial zu erhalten. Mit Vorteil könnte dann der mögliche Verstellweg so beschränkt werden, dass die - meist unerwünschten - fasertechnologischen Auswirkungen minimal bleiben. In anderen Fällen, bei denen eine fasertechnologische Wirkung erwünscht ist, z.B. um die Festigkeit des später hergestellten Papiers zu beeinflussen, ergibt sich durch die erwähnte Kombination ein zusätzlicher Freiheitsgrad bei der Regelstrategie des ganzen Dispergierverfahrens.

Außerdem erkennt man in dieser Fig. 4, dass der hier dargestellte Disperger zu einer direkten Dampfeinspeisung ausgerüstet ist. Die dazu vorgesehene Vorrichtung 22 verteilt den Dampf D gleichmäßig über den ganzen Umfang und speist ihn in einen ringförmigen, zwischen den Garnituren liegenden Dampfraum 23 ein. Eine solche Direkteinspeisung kann entfallen, wenn - wie in Fig. 2 gezeigt - eine Aufheizung des Stoffes in einer Heizschnecke erfolgen soll.

## Patentansprüche

1. Verfahren zur Dispergierung eines Papierfaserstoffes mit folgenden Schritten:
Bereitstellung einer wasserhaltigen Papierfaserstoffsuspension (S1);
Auspressen eines Teils des Wassers (W) in einer Eindickvorrichtung (3) zur Bildung eines hochkonsistenten Papierfaserstoffes (S2);
Dispergierung des hochkonsistenten Papierfaserstoffes (S2) mit einem einen Dispergerantrieb (2) aufweisenden Disperger (1),
**dadurch gekennzeichnet,**
**dass** der Entwässerungseffekt der Eindickvorrichtung (3) so gesteuert wird, dass er bei sinkender Leistungsaufnahme oder bei sinkendem Antriebsmoment des Dispergerantriebes (2) angehoben und bei steigender Leistungsaufnahme oder bei steigendem Antriebsmoment des Dispergerantriebes (2) gesenkt wird.

2. Verfahren nach Anspruch 1,
**dadurch gekennzeichnet,**
**dass** als Eindickvorrichtung (3) eine Schneckenpresse verwendet wird mit einer Pressschnecke, deren Antriebsmoment zur Einstellung des Entwässerungseffektes verändert wird.

3. Verfahren nach Anspruch 1 oder 2,
**dadurch gekennzeichnet,**
**dass** als Eindickvorrichtung (3) eine Schneckenpresse verwendet wird, bei der der Gegendruck des Presskuchens zur Einstellung des Entwässerungseffektes verändert wird.

4. Verfahren nach Anspruch 1,
**dadurch gekennzeichnet,**
**dass** als Eindickvorrichtung (3) eine Siebbandpresse verwendet wird mit mindestens einer Presswalze, deren Anpressdruck zur Einstellung des Entwässerungseffektes verändert wird.

5. Verfahren nach einem der voranstehenden Ansprüche,
**dadurch gekennzeichnet,**
**dass** der Disperger (1) mindestens zwei Dispergergarnituren (19, 20) aufweist, welche jeweils mehrere berührungslos ineinandergreifende ringförmige, konzentrische Zahnreihen enthalten, deren Zähne in Umfangsrichtung relativ zueinander bewegt werden, wodurch der hochkonsistente Papierfaserstoff dispergiert wird.

6. Verfahren nach Anspruch 5,
**dadurch gekennzeichnet,**
**dass** der axiale Abstand der zwei Dispergergarnituren (19, 20) verstellt wird,
wenn der Dispergiereffekt verändert werden soll und dass der dabei mögliche Verstellweg so eng begrenzt wird, dass sich das fasertechnologische Ergebnis der Dispergierung nicht oder nur in einem zulässigen Bereich ändert.

7. Verfahren nach Anspruch 6,
**dadurch gekennzeichnet,**
**dass** die Veränderung an der Eindickvorrichtung (3) Vorrang hat vor der Veränderung des Axialabstandes der Dispergergarnituren.

8. Verfahren nach Anspruch 6,
**dadurch gekennzeichnet,**
**dass** die Veränderungen an der Eindickvorrichtung (3) und die Änderung des Axialabstandes der Dispergergarnituren so aufeinander abgestimmt werden, dass Kurzzeitschwankungen durch Veränderung des Axialabstandes und Langzeitschwankungen durch Veränderung an der Eindickvorrichtung (3) ausgeregelt werden.

9. Verfahren nach einem der Ansprüche 6 bis 8,
**dadurch gekennzeichnet,**
**dass** die Veränderungen an der Eindickvorrichtung (3) und die Änderung des Axialabstandes der Dispergergarnituren so aufeinander abgestimmt werden, dass ein optimales Betriebsergebnis der Dispergieranlage erreicht wird.

10. Verfahren nach einem der voranstehenden Ansprüche,
**dadurch gekennzeichnet,**
**dass** die Antriebsleistung des Dispergers (1) auf einen Wert eingestellt wird, der zur Übertragung einer spezifischen Dispergierarbeit zwischen 30 kWh/t und 150 kWh/t führt.

## Claims

1. A method for the dispersion of a paper stock, comprising the following steps:
provision of a water-containing paper stock suspension (S1);
pressing out a portion of the water (W) in a thickening device (3) to form a high-consistency paper stock (S2);
dispersing the high-consistency paper stock (S2) using a disperser (1) having a disperser drive (2),
**characterised in that**
the dewatering effect of the thickening device (3) is controlled such that it is increased as the power consumption or the driving torque of the dispersion drive (2) drops, and is lowered as the power consumption or driving torque of the dispersion drive (2) increases.

2. A method according to Claim 1,
**characterised in that**
a screw press with a press screw, the driving torque of which is changed to adjust the dewatering effect, is used as thickening device (3).

3. A method according to Claim 1 or 2,
**characterised in that**
a screw press, in which the counter-pressure of the press cake is changed to adjust the dewatering effect, is used as thickening device (3).

4. A method according to Claim 1,
**characterised in that**
a belt filter press with at least one press roller, the contact pressure of which is changed to adjust the dewatering effect, is used as thickening device (3).

5. A method according to one of the preceding claims,
**characterised in that**
the disperser (1) has at least two disperser fittings (19, 20) which each contain a plurality of annular, concentric rows of teeth which mesh without contact, the teeth of which are moved relative to one another in the peripheral direction, whereby the high-consistency paper stock is dispersed.

6. A method according to Claim 5,
**characterised in that**
the axial distance between the two disperser fittings (19, 20) is adjusted if the dispersing effect is to be changed, and that the possible adjustment path is defined so narrowly that the result of the dispersion on the fibres does not change or changes only within a permissible range.

7. A method according to Claim 6,
**characterised in that**
the change on the thickening device (3) has priority over the change in the axial distance between the disperser fittings.

8. A method according to Claim 6,
**characterised in that**
the changes on the thickening device (3) and the change in the axial distance between the disperser fittings are matched to one another such that short-term fluctuations due to a change in the axial distance and long-term fluctuations due to a change on the thickening device (3) are compensated.

9. A method according to one of Claims 6 to 8,
**characterised in that**
the changes on the thickening device (3) and the change in the axial distance between the disperser fittings are matched to one another such that an optimum operating result for the dispersion unit is obtained.

10. A method according to one of the preceding claims,
**characterised in that**
the drive power of the disperser (1) is set to a value which results in the transmission of a specific dispersing work between 30 kWh/t and 150 kWh/t.

## Revendications

1. Procédé de dispersion d'une matière fibreuse de papier, comportant les étapes suivantes :
mise à disposition d'une suspension aqueuse (S1) de matière fibreuse de papier ;
expression d'une partie de l'eau (W) dans un dispositif d'épaississement (3), afin d'engendrer une matière fibreuse de papier (S2) de haute consistance ;
dispersion de la matière fibreuse de papier (S2) de haute consistance dans un disperseur (1) comportant un entraînement de dispersion (2),
**caractérisé en ce que**
l'effet de déshydratation du dispositif d'épaississement (3) est commandé de telle sorte qu'il soit augmenté lorsque la puissance absorbée baisse ou lorsque le couple d'entraînement de l'entraînement de dispersion (2) baisse, et réduit lorsque la puissance absorbée augmente ou lorsque le couple d'entraînement de l'entraînement de dispersion (2) augmente.

2. Procédé selon la revendication 1,
**caractérisé en ce que**,
en tant que dispositif d'épaississement (3), il est utilisé une presse à vis sans fin, comportant une vis sans fin de presse dont le couple d'entraînement est modifié pour le réglage de l'effet de déshydratation.

3. Procédé selon la revendication 1 ou 2,
**caractérisé en ce que**,
en tant que dispositif d'épaississement (3), il est utilisé une presse à vis sans fin dont la contre-pression du gâteau de presse est modifiée pour le réglage de l'effet de déshydratation.

4. Procédé selon la revendication 1,
**caractérisé en ce que,**
en tant que dispositif d'épaississement (3), il est utilisé une presse à bande de criblage, comportant au moins un cylindre de presse dont la pression d'application est modifiée pour le réglage de l'effet de déshydratation.

5. Procédé selon l'une des revendications précédentes,
**caractérisé en ce que**
le disperseur (1) comporte au moins deux garnitures de dispersion (19, 20), qui sont respectivement dotées de plusieurs rangées de dents concentriques, annulaires, s'engageant sans contact les unes dans les autres, dont les dents sont déplacées les unes par rapport aux autres dans la direction périphérique, moyen par lequel la matière fibreuse de papier de haute consistance est dispersée.

6. Procédé selon la revendication 5,
**caractérisé en ce que**
l'écartement axial entre les deux garnitures de dispersion (19, 20) est réglé lorsque l'effet de dispersion doit être modifié, et **en ce que** la distance de réglage en l'occurrence possible est limitée si étroitement que le résultat technologique en matière de fibres de la dispersion ne se modifie pas, ou que dans une plage admissible.

7. Procédé selon la revendication 6,
**caractérisé en ce que**
la modification au niveau du dispositif d'épaississement (3) est prioritaire par rapport à la modification de l'écartement axial des garnitures de dispersion.

8. Procédé selon la revendication 6,
**caractérisé en ce que**
les modifications au niveau du dispositif d'épaississement (3), et la modification de l'écartement axial entre les garnitures de dispersion, sont adaptées entre elles de telle sorte que des variations de courte durée dues à la modification de l'écartement axial, et des variations de longue durée dues à la modification au niveau du dispositif d'épaississement (3), se compensent.

9. Procédé selon l'une des revendications 6 à 8,
**caractérisé en ce que**
les modifications au niveau du dispositif d'épaississement (3), et la modification de l'écartement axial entre les garnitures de dispersion, sont adaptées entre elles de telle sorte qu'un résultat de fonctionnement optimal de l'installation de dispersion soit obtenu.

10. Procédé selon l'une des revendications précédentes,
**caractérisé en ce que**
la puissance d'entraînement du disperseur (1) est réglée sur une valeur qui conduit à une transmission d'une puissance spécifique de dispersion comprise entre 30 kWh/t et 150 kWh/t.
